# EUROPEAN PATENT APPLICATION

(11) **EP 4 804 285 A1**
(43) Date of publication of application: **09.09.2026**
(21) Application number: 24916361.9
(22) Date of filing: 12.08.2024
(51) Int. Cl.: H01M 10/0587, H01M 10/04

(54) **WINDING DEVICE AND BATTERY MANUFACTURING DEVICE**

(30) Priority: 11.01.2024 CN 202410043912
(71) Applicant: Contemporary Amperex Technology Co., Limited, Ningde, Fujian 352100 (CN)
(72) Inventor: XIE, Ming, Ningde, Fujian 352100 (CN); LUO, Zhongping, Ningde, Fujian 352100 (CN); LIN, Wenfa, Ningde, Fujian 352100 (CN); TANG, Minghao, Ningde, Fujian 352100 (CN); ZHANG, Shengwu, Ningde, Fujian 352100 (CN); DING, Yu, Ningde, Fujian 352100 (CN); KONG, Pan, Ningde, Fujian 352100 (CN)
(74) Representative: Lorenz Seidler Gossel Part. mbB
(86) International application number: PCT/CN2024/111517
(87) International publication number: WO 2025/148306

(57) **Abstract**

The present application is applicable to the technical field of battery production devices, and provides a winding device and a battery manufacturing device. The winding device (100) comprises: a laminating mechanism (10) used for unwinding a first electrode sheet (210), a first separator (220), and a second electrode sheet (230), and pressing the first electrode sheet (210), the first separator (220), and the second electrode sheet (230) to form a compounding sheet (250); a separator unwinding mechanism (20) used for unwinding a second separator (240); and a winding mechanism (30) provided on a discharging side of the laminating mechanism (10), the winding mechanism (30) being used for winding the compounding sheet (250) and the second separator (240) to form an electrode assembly (200). The winding device provided by the embodiments of the present application has reasonable layout, and the problem of the crowded space above the winding mechanism is solved.

## Description

The present application claims priority to Chinese Patent Application No. 202410043912.0, filed with the China National Intellectual Property Administration on January 11, 2024 and entitled "WINDING DEVICE AND BATTERY MANUFACTURING DEVICE", which is incorporated herein by reference in its entirety.

### TECHNICAL FIELD

The present application relates to the field of battery production devices, and in particular, to a winding device and a battery manufacturing device.

### BACKGROUND

In the production process of batteries, winding devices are required to wind electrode sheets into cells. A commonly used winding device feeds a cathode electrode sheet, an anode electrode sheet, and a separator separately, and performs winding on a winding mechanism. However, since the cathode electrode sheet, the anode electrode sheet, and the separator all converge at a feeding position of the winding mechanism for winding, the space is very crowded, which is inconvenient for the arrangement of various components.

### SUMMARY

In view of this, embodiments of the present application provide a winding device and a battery manufacturing device, which can solve the problem of crowded space above the winding mechanism.

Embodiments of the present application propose a winding device including: a laminating mechanism configured to unwind a first electrode sheet, a first separator, and a second electrode sheet, and to laminate the first electrode sheet, the first separator, and the second electrode sheet to form a laminated sheet; a separator unwinding mechanism configured to unwind a second separator; and a winding mechanism disposed on a discharging side of the laminating mechanism, where the winding mechanism is configured to wind the laminated sheet and the second separator to form an electrode assembly.

The above winding device includes the laminating mechanism, the separator unwinding mechanism, and the winding mechanism. The laminating mechanism is configured to laminate the first electrode sheet, the first separator, and the second electrode sheet to form the laminated sheet. The separator unwinding mechanism is configured to unwind the second separator. The winding mechanism is configured to wind the laminated sheet and the second separator to form the electrode assembly. The above winding device first laminates the first electrode sheet, the first separator, and the second electrode sheet into the laminated sheet, and then winds the laminated sheet and the second separator on the winding mechanism. The laminating mechanism and the winding mechanism of the above winding device can be spaced apart, so that each of the laminating mechanism and the winding mechanism can obtain a large space. In addition, the winding device does not need to separately feed the cathode electrode sheet, the anode electrode sheet, and the separator to the winding mechanism, solving the problem of crowded space above the winding mechanism, optimizing the layout of the winding device, and facilitating flexible arrangement of various components.

In some embodiments, the winding device further includes a first detection component, where the first detection component is disposed between the laminating mechanism and the winding mechanism and configured to detect the laminated sheet.

By adopting the above technical solution, the winding device includes the first detection component disposed between the laminating mechanism and the winding mechanism, the positions of the electrode sheets and the separator in the laminated sheet are relatively fixed and not easily offset, and the detection result is relatively accurate. In addition, disposing the first detection component upstream of the winding mechanism can more comprehensively detect the electrode assembly, reduce detection blind areas, and improve the detection accuracy.

In some embodiments, the laminating mechanism includes: a first unwinding roller configured to unwind the first electrode sheet; a second unwinding roller configured to unwind the first separator; a third unwinding roller configured to unwind the second electrode sheet; and a laminating assembly configured to laminate the first electrode sheet, the first separator, and the second electrode sheet.

The above laminating mechanism can laminate the first electrode sheet, the first separator, and the second electrode sheet at one time, with a simple laminating method and relatively high laminating efficiency.

In some embodiments, the winding device further includes a frame; the first unwinding roller, the second unwinding roller, and the third unwinding roller are disposed on one side of the frame; and the winding mechanism is disposed on the other side of the frame.

By adopting the above technical solution, the winding device separates the unwinding structure and the winding mechanism, so that each of the unwinding structure and the winding mechanism has a larger space, which facilitates flexible arrangement of various components.

In some embodiments, the winding device further includes a buffering mechanism, where the buffering mechanism is disposed between the laminating assembly and the winding mechanism, and the buffering mechanism is configured to wind the laminated sheet.

By adopting the above technical solution, the buffering mechanism can buffer and release the laminated sheet, so that the winding mechanism can continuously obtain fed materials, improving the winding efficiency.

In some embodiments, the winding device further includes: a first electrode sheet cutting apparatus disposed between the first unwinding roller and the laminating assembly, the first electrode sheet cutting apparatus being configured to cut the first electrode sheet; and a second electrode sheet cutting apparatus disposed between the third unwinding roller and the laminating assembly, the second electrode sheet cutting apparatus being configured to cut the second electrode sheet.

By adopting the above technical solution, the buffering mechanism can buffer and release the laminated sheet, thereby ensuring that the winding of the winding mechanism on the laminated sheet is not affected when the electrode sheets are cut, and allowing the winding mechanism to continuously obtain fed materials, reducing the occurrence of deceleration of the winding mechanism due to cutting of the electrode sheets, and significantly improving the winding efficiency.

In some embodiments, the buffering mechanism includes a fixed roller and a floating roller spaced apart, where the fixed roller is fixed relative to the laminating assembly, the floating roller is able to approach or move away from the fixed roller to change a length of the laminated sheet buffered in the buffering mechanism, and a movement direction of the floating roller intersects with a conveying direction of the laminating assembly.

By adopting the above technical solution, the buffering mechanism can adjust the length of the laminated sheet buffered to adapt to a winding speed of the winding mechanism and a cutting speed of the electrode sheets.

In some embodiments, the winding mechanism includes a turntable and at least two winding mandrels rotatably disposed on the turntable; and the winding mechanism has a winding station and an unloading station spaced apart along the rotation direction of the turntable, and the winding mandrel can rotate with the turntable to enter one of the winding station and the unloading station.

The winding mechanism provided by embodiments of the present application includes the turntable and the at least two winding mandrels disposed on the turntable. Different winding mandrels can sequentially rotate to the winding station for winding, reducing the feeding waiting time of the laminated sheet and the second separator, and improving the winding efficiency.

In some embodiments, an adhesive attaching station is further provided on the winding device, and the adhesive attaching station is disposed between the winding station and the unloading station along the rotation direction of the turntable; and the winding mandrel can rotate with the turntable to enter one of the winding station, the adhesive attaching station, and the unloading station.

In some embodiments, the winding mechanism further includes an adhesive attaching roller disposed at the adhesive attaching station, where the adhesive attaching roller is configured to attach an adhesive to a tail end of the electrode assembly.

By adopting the above technical solution, the adhesive attaching roller can attach the adhesive to the tail end of the second separator, so that the tail end of the second separator is not easily separated from the laminated sheet, improving the stability of the attachment between the second separator and the laminated sheet; and the winding mechanism can complete the processes of winding and adhesive attachment at one time, improving the manufacturing efficiency of the electrode assembly.

In some embodiments, a terminating station is further provided on the winding device, and the terminating station is disposed between the winding station and the adhesive attaching station along the rotation direction of the turntable; and the winding mandrel can rotate with the turntable to enter one of the winding station, the adhesive attaching station, the terminating station, and the unloading station.

In some embodiments, the winding mechanism further includes a terminating roller disposed adjacent to the terminating station, where the terminating roller cooperates with the winding mandrel to press the electrode assembly to terminate the electrode assembly.

By adopting the above technical solution, multiple winding mandrels can sequentially rotate to the terminating roller to terminate the electrode assembly, improving the stability of the attachment between the second separator and the laminated sheet.

In some embodiments, at least four winding mandrels are provided and spaced apart along a circumferential direction of the turntable.

By adopting the above technical solution, the at least four winding mandrels respectively correspond to actions of winding, terminating, adhesive attachment, and unloading. The winding mandrel performs only one action at each station, shortening the dwell time required for the winding mandrel at each station, and effectively improving the winding speed.

In some embodiments, the winding mandrel is telescopically disposed on the turntable; a retraction station is further provided on the winding device, and the retraction station is located between the unloading station and the winding station along the rotation direction of the turntable; the winding mandrel can rotate with the turntable to enter one of the winding station, the adhesive attaching station, the terminating station, the unloading station, and the retraction station; and when the winding mandrel enters the retraction station, the winding mandrel can retract relative to the turntable.

By adopting the above technical solution, the winding mandrel can perform actions of winding, terminating, adhesive attachment, unloading, and retraction at different stations, improving the winding speed.

In some embodiments, at least five winding mandrels are provided and spaced apart along the circumferential direction of the turntable.

By adopting the above technical solution, multiple winding mandrels can perform different actions simultaneously, reducing the feeding waiting time of the laminated sheet and the second separator, and effectively improving the winding speed.

In some embodiments, the winding mandrel includes two main body portions rotatably disposed on the turntable, the two main body portions are spaced apart to form an accommodation gap, the accommodation gap is configured for allowing the laminated sheet and the second separator to pass through, and the two main body portions cooperate to wind the laminated sheet and the second separator.

By adopting the above technical solution, head ends of the laminated sheet and the second separator can enter and be fixed in the accommodation gap, and then the rotation of the winding mandrel can wind the laminated sheet and the second separator on the winding mandrel; and tail ends of the laminated sheet and the second separator can be located on an outer side of the winding mandrel, so as to facilitate subsequent terminating processing on the tail end of the electrode assembly.

In some embodiments, the separator unwinding mechanism is disposed between the discharging side of the laminating mechanism and a feeding side of the winding mechanism.

By adopting the above technical solution, the separator unwinding mechanism is located downstream of the laminating mechanism, the second electrode sheet provided by the separator unwinding mechanism can be stacked with the laminated sheet and wound together, and the separator unwinding mechanism can be spaced apart from the winding mechanism, avoiding the problem of crowded space above the winding mechanism.

In some embodiments, the separator unwinding mechanism includes a separator unwinding roller and a first conveying roller; the separator unwinding roller is configured to unwind the second separator; and the first conveying roller is configured to allow the second separator to converge with the laminated sheet to form a stacked sheet, and to convey the stacked sheet to the winding mechanism.

By adopting the above technical solution, the winding device separates each unwinding roller from the winding mechanism, with a flexible and convenient layout.

In some embodiments, the winding device further includes a second detection component, where the second detection component is disposed between the first conveying roller and the winding mechanism, and the second detection component is configured to detect the stacked sheet.

By adopting the above technical solution, the second detection component is disposed between the first conveying roller and the winding mechanism and can comprehensively detect the state of the stacked sheet, and the detection result can have relatively high accuracy.

In some embodiments, the winding device further includes a separator laminating assembly, where the separator laminating assembly is disposed between the first conveying roller and the winding mechanism, and the separator laminating assembly is configured to laminate the second separator with the laminated sheet.

By adopting the above technical solution, the second separator and the laminated sheet can be laminated in advance before entering the winding mechanism, without mutual displacement.

In some embodiments, the separator unwinding mechanism is disposed on one side of the winding mechanism, the separator unwinding mechanism is configured to convey the second separator to the winding mandrel located at the winding station, and the laminated sheet and the second separator converge on the winding mandrel at the winding station.

In some embodiments, the winding device further includes a separator cutting mechanism, where the separator cutting mechanism is disposed adjacent to the winding mechanism and configured to cut the first separator and/or the second separator.

By adopting the above technical solution, the separator cutting mechanism is disposed on the winding mechanism, so that the winding device can cut the separator before or after the electrode assembly is wound, without consuming separate separator cutting time, improving the overall winding efficiency.

In some embodiments, along the rotation direction of the turntable, the separator cutting mechanism is disposed between the winding station and the unloading station.

By adopting the above technical solution, the separator cutting mechanism can cut the first separator and/or the second separator after the electrode assembly is wound, so as to facilitate terminating of the electrode assembly. In addition, the separator cutting mechanism is located between the winding station and the unloading station, without consuming separate separator cutting time; and the winding efficiency of the winding device is relatively high.

In some embodiments, the separator cutting mechanism is located on the feeding side of the winding mechanism.

By adopting the above technical solution, the separator cutting mechanism does not need to avoid the winding mandrel, which helps to simplify the structure of the device.

In some embodiments, the winding device further includes a conveying member disposed between the separator cutting mechanism and the winding mechanism, and the conveying member is configured to convey the first separator and/or the second separator to the winding mechanism.

By adopting the above technical solution, the winding device can convey the separator while cutting the separator, which significantly improves the winding efficiency compared to a method of first cutting the separator and then conveying the separator.

In some embodiments, the conveying member is a vacuum adsorption conveying belt.

By adopting the above technical solution, the stability of conveying the separator can be improved, reducing the probability of the separator warping or displacing during conveyance.

In some embodiments, a conveying speed of the vacuum adsorption conveying belt is equal to a winding speed of the winding mandrel at the winding station.

By adopting the above technical solution, the tension of the separator may be zero, reducing the probability of separator deformation due to excessive tension; and the vacuum adsorption conveying belt has a relatively fast conveying speed and high conveying efficiency.

In some embodiments, the separator cutting mechanism includes a cam cutter and a cutter seat disposed opposite each other, and the cam cutter can rotate relative to the cutter seat and cooperate with the cutter seat to cut the first separator and/or the second separator.

By adopting the above technical solution, the cam cutter can periodically perform the cutting action, and during use, and a rotation period of the cam cutter can be determined according to a length and linear speed of the separator, so that the cam cutter can cut the separator without deceleration.

In some embodiments, a rotation period duration of the cam cutter is equal to a ratio of a length of the first separator in the electrode assembly to a conveying linear speed of the first separator; and/or
a rotation period duration of the cam cutter is equal to a ratio of a length of the second separator in the electrode assembly to a conveying linear speed of the second separator.

By satisfying the above conditions, the cam cutter can continuously rotate. Since the cam cutter does not need to stop, the waiting time for cutting is reduced. The cam cutter can cut the separator to be cut every rotation, without reducing the conveying linear speed of the separator for cutting the separator, achieving cutting of the separator without deceleration, and effectively improving the overall winding speed.

The present application further provides a battery manufacturing device including the winding device.

The above description is only an overview of the technical solution of the present application. In order to more clearly understand the technical means of the present application, it can be implemented in accordance with the contents of the specification, and in order to make the above and other purposes, features, and advantages of the present application more obvious and understandable, specific embodiments of the present application are particularly listed below.

### BRIEF DESCRIPTION OF DRAWINGS

FIG. 1 is a schematic structural diagram of a winding device according to a first embodiment of the present application;
FIG. 2 is a schematic structural diagram of a winding device according to a second embodiment of the present application;
FIG. 3 is a schematic structural diagram of a winding device according to a third embodiment of the present application;
FIG. 4 is a schematic structural diagram of a winding device according to a fourth embodiment of the present application; and
FIG. 5 is a schematic structural diagram of an electrode assembly according to some embodiments of the present application.

The meanings of the reference signs in the drawings are as follows:
100. winding device; 10. laminating mechanism; 11. first unwinding roller; 12. second unwinding roller; 13. third unwinding roller; 14. laminating assembly; 20. separator unwinding mechanism; 21. separator unwinding roller; 22. first conveying roller; 30. winding mechanism; 31. turntable; 32. winding mandrel; 321. main body portion; 322. accommodation gap; 33. terminating roller; 34. adhesive attaching roller; 301. winding station; 302. terminating station; 303. adhesive attaching station; 304. unloading station; 305. retraction station; 41. first detection component; 42. second detection component; 51. first electrode sheet cutting apparatus; 52. second electrode sheet cutting apparatus; 60. buffering mechanism; 61. fixed roller; 62. floating roller; 70. unloading assembly; 80. separator cutting mechanism; 81. cam cutter; 82. cutter seat; 90. conveying member; 200. electrode assembly; 210. first electrode sheet; 220. first separator; 230. second electrode sheet; 240. second separator; and 250. laminated sheet.

### DESCRIPTION OF EMBODIMENTS

The embodiments of the technical solution of the present application will be described in detail below in conjunction with the drawings. The following embodiments are only used to more clearly illustrate the technical solution of the present application, and therefore are only examples, and cannot be used to limit the protection scope of the present application.

Unless otherwise defined, all technical and scientific terms used herein have the same meaning as commonly understood by those skilled in the art to which the present application belongs; the terms used herein are only for the purpose of describing specific embodiments and are not intended to limit the present application; and the terms "include", "comprise", and "have" and any other variations thereof in the specification, claims and brief description of drawings of the present application are intended to cover non-exclusive inclusions.

In the description of the embodiments of the present application, the technical terms "first", "second", and the like are only used to distinguish different objects and cannot be understood as indicating or implying relative importance or implicitly indicating the number, specific order, or primary-secondary relationship of the indicated technical features. In the description of the embodiments of the present application, "multiple" means two or more, unless otherwise explicitly and specifically defined.

Reference to "embodiment" in the specification means that specific features, structures, or characteristics described with reference to an embodiment may be included in at least one embodiment of the present application. The appearance of this phrase in various places in the specification does not necessarily refer to the same embodiment, nor is it an independent or alternative embodiment that is mutually exclusive with other embodiments. Those skilled in the art explicitly and implicitly understand that the embodiments described herein can be combined with other embodiments.

In the description of the embodiments of the present application, the term "and/or" is merely a relational term describing the association of associated objects, indicating that three relationships can exist. For example, A and/or B may indicate the following three cases: presence of only A; presence of both A and B; and presence of only B. In addition, the character "/" in this specification generally indicates an "or" relationship between the contextually associated objects.

In the description of the embodiments of the present application, the term "multiple" refers to two or more (including two), similarly, "multiple groups" refers to two or more groups (including two groups), and "multiple pieces" refers to two or more pieces (including two pieces).

In the description of the embodiments of the present application, the orientation or positional relationships indicated by the technical terms "center", "longitudinal", "transverse", "length", "width", "thickness", "upper", "lower", "front", "rear", "vertical", "horizontal", "top", "bottom", "inner", "outer", and the like are based on the orientation or positional relationships shown in the drawings, and are only for the convenience of describing the embodiments of the present application and simplifying the description, rather than indicating or implying that the referred apparatus or element must have a specific orientation, be constructed and operated in a specific orientation, and therefore cannot be understood as limiting the embodiments of the present application.

In the description of the embodiments of the present application, unless otherwise explicitly specified and defined, the technical terms "installation", "join", "connection", "fixing", and the like should be understood in a broad sense. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. For those of ordinary skill in the art, the specific meanings of the above terms in the embodiments of the present application can be understood according to specific situations.

At present, in the production process of batteries, winding devices are required to wind electrode sheets into cells. A commonly used winding device feeds a cathode electrode sheet, an anode electrode sheet, and a separator separately, and performs winding on a winding mechanism. However, since the cathode electrode sheets, the anode electrode sheets, and the separator all converge at a feeding position of the winding mechanism for winding, the space is very crowded, which is inconvenient for the arrangement of various components.

In order to solve the problem of crowded space in the winding device, the present application provides a winding device including a laminating mechanism, a separator unwinding mechanism, and a winding mechanism. The laminating mechanism is configured to laminate a first electrode sheet, a first separator, and a second electrode sheet to form a laminated sheet. The separator unwinding mechanism is configured to unwind a second separator. The winding mechanism is configured to wind the laminated sheet and the second separator to form an electrode assembly. The above winding device first laminates the first electrode sheet, the first separator, and the second electrode sheet into the laminated sheet, and then winds the laminated sheet and the second separator on the winding mechanism. The laminating mechanism and the winding mechanism of the above winding device are spaced apart, so that each of the laminating mechanism and the winding mechanism can obtain a large space, solving the problem of crowded space above the winding mechanism, optimizing the layout of the winding device, and facilitating flexible arrangement of various components.

The winding device provided by embodiments of the present application can be configured to manufacture electrode assemblies. The electrode assembly can be used as a component in a battery cell where electrochemical reactions occur. The battery cell can be used in electric apparatuses using batteries as power sources or various energy storage systems using batteries as energy storage elements. The electric apparatuses include but are not limited to mobile phones, tablets, laptops, electric toys, electric tools, electric bicycles, electric cars, ships, spacecraft, and the like. The electric toys may include fixed or mobile electric toys, such as game consoles, electric toy cars, electric toy ships, and electric toy airplanes. The spacecraft may include airplanes, rockets, space shuttles, and spaceships, and the like.

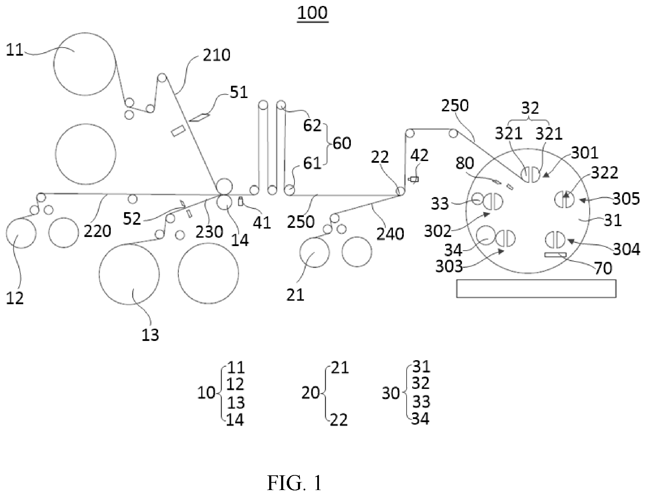

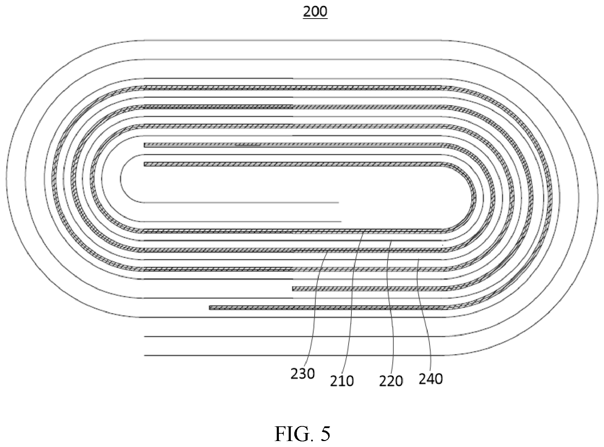

According to a first aspect, embodiments of the present application provide a winding device. Referring to FIG. 1 and FIG. 5, a first embodiment of the present application proposes a winding device 100 including a laminating mechanism 10, a separator unwinding mechanism 20, and a winding mechanism 30. The laminating mechanism 10 is configured to unwind a first electrode sheet 210, a first separator 220, and a second electrode sheet 230, and to laminate the first electrode sheet 210, the first separator 220, and the second electrode sheet 230 to form a laminated sheet 250. The separator unwinding mechanism 20 is configured to unwind a second separator 240. The winding mechanism 30 is disposed on a discharging side of the laminating mechanism 10, and the winding mechanism 30 is configured to wind the laminated sheet 250 and the second separator 240 to form an electrode assembly 200.

The first electrode sheet 210 and the second electrode sheet 230 have opposite polarities, one of the first electrode sheet 210 and the second electrode sheet 230 is an anode sheet, and the other is a cathode sheet.

The laminating mechanism 10 refers to a mechanism configured to laminate the first electrode sheet 210, the first separator 220, and the second electrode sheet 230 so that the first electrode sheet 210, the first separator 220, and the second electrode sheet 230 are sequentially attached. The laminating mechanism 10 may include multiple unwinding members, where the multiple unwinding members are respectively configured to unwind the first electrode sheet 210, the first separator 220, and the second electrode sheet 230, and the unwinding members may be but are not limited to structures such as rollers, reels, and rotating shafts.

The laminating mechanism 10 further includes one or more laminating assemblies 14, where the laminating assembly 14 includes two laminating rollers disposed opposite each other. When the first electrode sheet 210, the first separator 220, and the second electrode sheet 230 are conveyed between the two laminating rollers, the two laminating rollers press the first electrode sheet 210, the first separator 220, and the second electrode sheet 230, so that the first electrode sheet 210, the first separator 220, and the second electrode sheet 230 are laminated to form the laminated sheet 250.

In other embodiments, the laminating mechanism 10 may first laminate the first electrode sheet 210 and the first separator 220, and then laminate the second electrode sheet 230 with the first electrode sheet 210 and the first separator 220 that are laminated, so that the laminated sheet 250 is also formed.

In the laminated sheet 250, the first electrode sheet 210, the first separator 220, and the second electrode sheet 230 are sequentially stacked, and both sides of the first separator 220 have adhesiveness, so that relative positions of the first electrode sheet 210, the first separator 220, and the second electrode sheet 230 are fixed and not easily moved relative to each other. Therefore, after the laminated sheet 250 is formed, a detection component can be configured to detect the laminated sheet 250, where detection items may include: detecting whether the first separator 220 can cover the first electrode sheet 210 and the second electrode sheet 230, whether the laminated sheet 250 has problems of head throwing or tail throwing, and the like.

At a cutting position of the electrode sheet, the electrode sheet is prone to swinging, the phenomenon of the head of the electrode sheet being offset is called "head throwing", and the phenomenon of the tail of the electrode sheet being offset is called "tail throwing". In related technologies, the winding device winds the first electrode sheet 210, the first separator 220, the second electrode sheet 230, and the second separator 240 at a winding mandrel 32, and a CCD detection mechanism is used for detection. The CCD detection mechanism photographs toward the winding mandrel. Due to angle limitations, the head of the electrode assembly is difficultly photographed by the CCD detection mechanism during winding, and the tail of the electrode assembly is also difficultly photographed after winding, making the detection of the electrode assembly have detection blind areas, and making it difficult to detect the problems of head throwing and tail throwing of the electrode sheets. The winding device 100 provided by the embodiments of the present application laminate the first electrode sheet 210, the second electrode sheet 230, and the first separator 220 before the electrode sheets are wound, facilitating all-round detection of the laminated sheet 250 before winding. The problems of head throwing and tail throwing can be detected, and no detection blind area exists.

In addition, both sides of the laminated sheet 250 are provided with electrode sheets. During the conveyance of the laminated sheet 250, the friction forces on both sides of the laminated sheet 250 along its thickness direction are consistent. When the laminated sheet 250 passes through a conveying roller, the roller is less likely to disengage from the electrode sheets.

The separator unwinding mechanism 20 is configured to provide the second separator 240 and unwind the second separator 240. The separator unwinding mechanism 20 may include a roller or other structures such as reels and rotating shafts. The separator unwinding mechanism 20 may be disposed downstream of the laminating mechanism 10 or may be disposed on one side of the winding mechanism 30. The separator unwinding mechanism 20 may include a passive structure, that is, other structures in the winding device 100 (for example, the winding mechanism 30) pull the second separator 240 to make the separator unwinding mechanism 20 unwind and feed. The separator unwinding mechanism 20 may alternatively include an active structure. For example, other structures such as a motor control the unwinding and feeding of the separator unwinding mechanism 20.

The winding mechanism 30 refers to a mechanism in the winding device 100 that winds the electrode sheets and the separators. The winding mechanism 30 is located downstream of the laminating mechanism 10, where the downstream refers to an area through which the laminated sheet 250 passes after output from the laminating mechanism 10. The winding mechanism 30 is spaced apart from the laminating mechanism 10. Optionally, the winding mechanism 30 and the laminating mechanism 10 are spaced apart in the horizontal direction, so that each of the winding mechanism 30 and the laminating mechanism 10 can obtain a large layout space, facilitating the arrangement of various components. The winding mechanism 30 may include a winding mandrel 32 for winding the laminated sheet 250 and the second separator 240, and the winding mechanism 30 may further include a pressing member, an adhesive attaching member, an unloading member, and the like that are used for terminating processing.

The winding device 100 further includes a frame. The frame is configured to provide an installation environment for the laminating mechanism 10, the separator unwinding mechanism 20, and the winding mechanism 30. The frame may be a rectangular box structure, or the frame may be other structures. The material of the frame may include metal, plastic, or other materials. The frame includes a vertical plate. The laminating mechanism 10, the separator unwinding mechanism 20, and the winding mechanism 30 can be installed on the vertical plate.

The above winding device 100 includes the laminating mechanism 10, the separator unwinding mechanism 20, and the winding mechanism 30. The laminating mechanism 10 is configured to laminate the first electrode sheet 210, the first separator 220, and the second electrode sheet 230 to form the laminated sheet 250. The separator unwinding mechanism 20 is configured to unwind the second separator 240. The winding mechanism 30 is configured to wind the laminated sheet 250 and the second separator 240 to form the electrode assembly 200. The above winding device 100 first laminates the first electrode sheet 210, the first separator 220, and the second electrode sheet 230 into the laminated sheet 250, and then winds the laminated sheet 250 and the second separator 240 on the winding mechanism 30. The laminating mechanism 10 and the winding mechanism 30 of the winding device 100 can be spaced apart, so that each of the laminating mechanism 10 and the winding mechanism 30 can obtain a large space. In addition, the winding device 100 does not need to separately feed the cathode electrode sheet, the anode electrode sheet, and the separator to the winding mechanism 30, solving the problem of crowded space above the winding mechanism 30, optimizing the layout of the winding device 100, and facilitating flexible arrangement of various components. In addition, since the laminating mechanism 10 laminates the first electrode sheet 210, the first separator 220, and the second electrode sheet 230 to form the laminated sheet 250, the laminated sheet 250 can be detected before entering the winding mechanism 30. The problems of head throwing and tail throwing can be detected, solving the problem of detection blind areas when the wound electrode assembly 200 is detected at the winding mechanism 30.

In some embodiments, referring to FIG. 1, the winding device 100 further includes a first detection component 41. The first detection component 41 is disposed between the laminating mechanism 10 and the winding mechanism 30. The first detection component 41 is configured to detect the laminated sheet 250.

The first detection component 41 may include a camera, a machine vision detection component, or other structures. The camera is, for example, a CCD camera. The first detection component 41 may further include other elements such as a controller. The first detection component 41 can acquire image information (for example, position, color, and shape) of the opposite electrode sheet, separator, laminated sheet 250, or electrode assembly 200, and can convert the image information into a digital signal and send the digital signal to the controller, so that the controller can determine whether the electrode sheet, separator, laminated sheet 250, or electrode assembly 200 meets the requirements according to a preset program.

The first detection component 41 is disposed between the laminating mechanism 10 and the winding mechanism 30. The first detection component 41 disposed at this position can detect the state of the laminated sheet 250 after laminated by the laminating mechanism 10. The laminated sheet 250 can be conveyed straight. The first detection component 41 can relatively comprehensively detect the state of the entire laminated sheet 250 passing the first detection component 41, and the detection result can have relatively high accuracy.

In related technologies, the winding device 100 winds the electrode sheets and the separators at the winding mandrel 32, which causes the heads and tails of the electrode sheets and separators entering the winding mandrel 32 to be not easily detected by the detection component. In these embodiments, the winding device 100 includes the first detection component 41 disposed between the laminating mechanism 10 and the winding mechanism 30. Positions of the electrode sheets and the separator in the laminated sheet 250 are relatively fixed and not easily offset, and the detection result is relatively accurate. In addition, disposing the first detection component 41 upstream of the winding mechanism 30 can more comprehensively detect the electrode assembly 200, reduce detection blind areas, and improve the detection accuracy.

In some embodiments, referring to FIG. 1, the laminating mechanism 10 includes a first unwinding roller 11, a second unwinding roller 12, a third unwinding roller 13, and a laminating assembly 14. The first unwinding roller 11 is configured to unwind the first electrode sheet 210. The second unwinding roller 12 is configured to unwind the first separator 220. The third unwinding roller 13 is configured to unwind the second electrode sheet 230. The laminating assembly 14 is configured to laminate the first electrode sheet 210, the first separator 220, and the second electrode sheet 230.

When the winding device 100 is in an initial state, the first electrode sheet 210 is wound on the first unwinding roller 11, the first separator 220 is wound on the second unwinding roller 12, and the second electrode sheet 230 is wound on the third unwinding roller 13. When the winding device 100 is in an operation state, the first unwinding roller 11 is configured to unwind the first electrode sheet 210, the second unwinding roller 12 is configured to unwind the first separator 220, the third unwinding roller 13 is configured to unwind the second electrode sheet 230; and the laminating assembly 14 is configured to receive the first electrode sheet 210, the first separator 220, and the second separator 240, and to laminate the first electrode sheet 210, the first separator 220, and the second electrode sheet 230.

The laminating assembly 14 includes two laminating rollers disposed opposite each other. The first electrode sheet 210, the first separator 220, and the second electrode sheet 230 are conveyed between the two laminating rollers. The two laminating rollers cooperate with each other to apply a certain pressure to the first electrode sheet 210, the first separator 220, and the second electrode sheet 230, so as to laminate the first electrode sheet 210, the first separator 220, and the second electrode sheet 230. The first separator 220 is located between the first electrode sheet 210 and the second electrode sheet 230 and configured to isolate the first electrode sheet 210 from the second electrode sheet 230. The first electrode sheet 210 and the second electrode sheet 230 are fixed together by an adhesive on the first separator 220.

The laminating mechanism 10 further includes multiple conveying rollers. For example, one or more conveying rollers are disposed between the first unwinding roller 11 and the laminating roller to convey the first electrode sheet 210 on the first unwinding roller 11 to the laminating assembly 14. One or more conveying rollers are disposed between the second unwinding roller 12 and the laminating roller to convey the first separator 220 on the second unwinding roller 12 to the laminating assembly 14. One or more conveying rollers are disposed between the third unwinding roller 13 and the laminating roller to convey the second electrode sheet 230 on the third unwinding roller 13 to the laminating assembly 14.

In some embodiments, since the first separator 220 needs to be disposed between the first electrode sheet 210 and the second electrode sheet 230, the second unwinding roller 12 is located between the first unwinding roller 11 and the third unwinding roller 13, making the space layout of the laminating mechanism 10 relatively reasonable. It can be understood that the unwinding rollers and the laminating assembly 14 can be flexibly arranged, which are not limited to the above arrangement manner. Optionally, in a height direction of the winding device 100, the first unwinding roller 11, the second unwinding roller 12, and the third unwinding roller 13 are sequentially arranged from top to bottom, so that the first electrode sheet 210, the first separator 220, and the second electrode sheet 230 are stacked from top to bottom. The first electrode sheet 210 may be an anode sheet, and the second electrode sheet 230 may be a cathode sheet. In addition, in the formed laminated sheet 250, a length of the anode sheet is greater than a length of the cathode sheet, so that the anode sheet can cover the cathode sheet. It can be understood that in other embodiments, the first electrode sheet 210 can alternatively be configured as a cathode sheet, and the second electrode sheet 230 can be configured as an anode sheet.

The above laminating mechanism 10 can laminate the first electrode sheet 210, the first separator 220, and the second electrode sheet 230 at one time, with a simple laminating method and relatively high laminating efficiency.

In some embodiments, referring to FIG. 1, the first unwinding roller 11, the second unwinding roller 12, and the third unwinding roller 13 are disposed on a feeding side of the laminating assembly 14. The winding mechanism 30 is disposed on a discharging side of the laminating assembly 14. The winding device 100 further includes a frame. The first unwinding roller 11, the second unwinding roller 12, and the third unwinding roller 13 are installed on one side of the frame. The winding mechanism 30 is installed on the other side of the frame.

Specifically, the winding device 100 has an unwinding area and a winding area. The unwinding area and the winding area are distributed along a direction parallel to a support plane of the winding device 100. The first unwinding roller 11, the second unwinding roller 12, and the third unwinding roller 13 are disposed in the unwinding area. The winding mechanism 30 is disposed in the winding area. The laminating assembly 14 is disposed between the unwinding area and the winding area.

By adopting the above technical solution, the winding device 100 separates the unwinding structure and the winding mechanism 30, so that function areas are distributed with a larger spacing and each have a larger space, facilitating flexible arrangement of various components.

In some embodiments, referring to FIG. 1, the winding device 100 further includes a buffering mechanism 60. The buffering mechanism 60 is configured to buffer the laminated sheet 250.

The buffering mechanism 60 refers to a structure in the winding device 100 for temporarily storing the laminated sheet 250. The buffering mechanism 60 can also release the laminated sheet 250 buffered by the buffering mechanism 60. The buffering mechanism 60 is disposed between the laminating assembly 14 and the winding mechanism 30 to wind the laminated sheet 250.

The buffering mechanism 60 may include one or more rollers. The laminated sheet 250 can bypass one or more rollers of the buffering mechanism 60 and then enter the winding mechanism 30. A length of the laminated sheet 250 buffered on the buffering mechanism 60 can be flexibly adjusted.

By adopting the above technical solution, the buffering mechanism 60 can buffer and release the laminated sheet 250, so that the winding mechanism 30 can continuously obtain fed materials, improving the winding efficiency.

In some embodiments, the winding device 100 further includes a first electrode sheet cutting apparatus 51 and a second electrode sheet cutting apparatus 52. The first electrode sheet cutting apparatus 51 is disposed between the first unwinding roller 11 and the laminating assembly 14, and the first electrode sheet cutting apparatus 51 is configured to cut the first electrode sheet 210 for slicing. The second electrode sheet cutting apparatus 52 is disposed between the third unwinding roller 13 and the laminating assembly 14, and the second electrode sheet cutting apparatus 52 is configured to cut the second electrode sheet 230 for slicing.

The electrode sheet cutting apparatus refers to a structure in the winding device 100 for cutting the electrode sheets. The first electrode sheet cutting apparatus 51 and the second electrode sheet cutting apparatus 52 may each include multiple cutting structures, such as a linear cutter that reciprocates along a straight line and a cam cutter that rotates around an axis. The linear cutter is used in conjunction with a fixed cutter, and the linear cutter can move toward or away from the fixed cutter.

By adopting the above technical solution, the laminating mechanism 10 cuts the first electrode sheet 210 and the second electrode sheet 230 in advance before laminating the electrode sheets, and the buffering mechanism 60 can buffer and release the laminated sheet 250, thereby ensuring that the winding of the winding mechanism 30 on the electrode sheets is not affected when the electrode sheets are cut, and significantly improving the winding efficiency.

In other embodiments, the laminated sheet 250 can alternatively be formed first, and then the first electrode sheet 210, the second electrode sheet 230, and the first separator 220 can be cut simultaneously.

Referring to FIG. 1, the buffering mechanism 60 includes a fixed roller 61 and a floating roller 62 spaced apart. The fixed roller 61 is fixed relative to the laminating assembly 14. The floating roller 62 can approach or move away from the fixed roller 61 to change a length of the laminated sheet 250 buffered in the buffering mechanism 60, and a movement direction of the floating roller 62 intersects with a conveying direction of the laminating assembly 14.

The fixed roller 61 refers to a roller in the buffering mechanism 60 that is fixed relative to the laminating assembly 14, that is, the position of the fixed roller 61 is also fixed relative to the frame. The fixed roller 61 may be a cylindrical roller, a prismatic roller, or a roller in other shapes. The material of the fixed roller 61 may include plastic, metal, or other materials. The fixed roller 61 can rotate relative to the frame or can be fixed relative to the frame. The fixed roller 61 may be a passive roller and rotates with the movement of the laminated sheet 250, or the fixed roller 61 may be an active roller and is driven by a driver such as a motor to rotate.

The floating roller 62 refers to a roller in the buffering mechanism 60 that can move relative to the fixed roller 61, that is, the position of the movable roller can change on the frame. The floating roller 62 may be a cylindrical roller, a prismatic roller, or a roller of other shapes. The material of the floating roller 62 may include plastic, metal, or other materials. The floating roller 62 can rotate relative to the frame or can be fixed relative to the frame. The floating roller 62 may be a passive roller and rotates with the movement of the electrode sheets and separators, or the floating roller 62 may be an active roller and is driven by a driver such as a motor to rotate.

The floating roller 62 can move along a direction approaching and moving away from the fixed roller 61. When the floating roller 62 moves along a direction away from the fixed roller 61, the length of the laminated sheet 250 stored by the buffering mechanism 60 increases. When the floating roller 62 moves along a direction approaching the fixed roller 61, the length of the laminated sheet 250 stored by the buffering mechanism 60 decreases, so that part of the laminated sheet 250 is released.

The floating of the floating roller 62 may be passive floating or active floating. In some embodiments, the floating of the floating roller 62 is achieved by elastic members such as springs and rubber strips. In this case, the floating roller 62 passively floats. In some other embodiments, the floating of the floating roller 62 is achieved by active power components such as cylinders and hydraulic cylinders. In this case, the floating roller 62 actively floats.

One, two, or more fixed rollers 61 may be provided. One, two, or more floating rollers may be provided. When two or more fixed rollers 61 and floating rollers 62 are provided, the fixed rollers 61 and the floating rollers 62 can be alternately arranged sequentially along a conveying path of the laminated sheet 250.

These embodiments provide some specific structures of the buffering mechanism 60. The buffering and releasing effect of the laminated sheet 250 is achieved by the movement of the floating roller 62. The buffering mechanism 60 can adjust the length of the laminated sheet 250 buffered to adapt to a winding speed of the winding mechanism 30 and a cutting speed of the electrode sheets.

In some embodiments, referring to FIG. 1, the winding mechanism 30 includes a turntable 31 and at least two winding mandrels 32 rotatably disposed on the turntable 31. The winding mechanism 30 has a winding station 301 and an unloading station 304 spaced apart along a rotation direction of the turntable 31. The winding mandrel 32 can rotate with the turntable 31 to enter one of the winding station 301 and the unloading station 304.

The turntable 31 is rotatably disposed on the frame. The turntable 31 may be in a circular shape, a square shape, or other shapes. The material of the turntable 31 may include metal, plastic, or other shapes.

The winding mandrel 32 refers to a structure in the winding mechanism 30 for winding the electrode assembly 200. According to the desired shape of the electrode assembly 200, the winding mandrel 32 may be cylindrical to form a cylindrical electrode assembly 200, or the winding mandrel 32 may be prismatic to form a square electrode assembly 200. It can be understood that the winding mandrel 32 may alternatively be in other shapes.

The winding mandrel 32 is disposed on the turntable 31 and can rotate relative to the turntable 31 to facilitate the winding of the electrode assembly 200. At least two winding mandrels 32 are provided. Specifically, two or more winding mandrels 32 may be provided.

The winding station 301 is located on one side of the winding mechanism 30 close to the laminating mechanism 10. The winding mandrel 32 receives the laminated sheet 250 and the second separator 240 on the winding station 301, and winds the laminated sheet 250 and the second separator 240 multiple turns to form the electrode assembly 200.

The unloading station 304 may be located on one side of the winding mechanism 30 away from the laminating mechanism 10. An unloading assembly 70 is provided at the unloading station 304. The unloading assembly 70 refers to a structure configured to remove the electrode assembly 200 from the winding mandrel 32. The unloading assembly 70 removes the electrode assembly 200 on the winding mandrel 32, so that the winding mandrel 32 is in an empty state, thereby helping the empty winding mandrel 32 to move to the winding station 301 for the next winding action. The unloading assembly 70 may include a gripper, a manipulator, or other structures. In some embodiments, the unloading assembly 70 includes a gripper and a platform. The gripper is configured to remove the wound electrode assembly 200 from the winding mandrel 32. The platform is configured to carry the electrode assembly 200 removed by the gripper, so as to help subsequent processes to acquire the wound electrode assembly 200 from the platform.

The turntable 31 can rotate around its own axis to drive multiple winding mandrels 32 to rotate around a rotating shaft of the turntable 31, so that the winding mandrels 32 can sequentially rotate from the winding station 301 to the unloading station 304, and then rotate from the unloading station 304 to the winding station 301.

For example, two winding mandrels 32 are provided on the turntable 31. One winding mandrel 32 is located on the winding station 301, the winding mandrel 32 can wind the laminated sheet 250 and the second separator 240 to form a wound electrode assembly 200. In this case, the other winding mandrel 32 is located on the unloading station 304 for unloading; then, the turntable 31 rotates, the winding mandrel 32 wound with the electrode assembly 200 rotates to the unloading station 304 for unloading, and the winding mandrel 32 that has completed unloading rotates to the winding station 301 for a winding action. It can be understood that more than two winding mandrels 32 may alternatively be provided, which can further improve the winding efficiency of the winding mechanism 30.

The winding mechanism 30 provided by the embodiments of the present application includes the turntable 31 and the at least two winding mandrels 32 provided on the turntable 31. During the operation process of the winding device 100, the winding mandrels 32 enter the corresponding stations and perform the corresponding production processes simultaneously, reducing the feeding waiting time of the laminated sheet 250 and the second separator 240, and improving the winding efficiency.

In some embodiments, referring to FIG. 1 and FIG. 5, an adhesive attaching station 303 is further provided on the winding device 100. The adhesive attaching station 303 is disposed between the winding station 301 and the unloading station 304 along the rotation direction of the turntable 31. The winding mandrel 32 can rotate with the turntable 31 to enter one of the winding station 301, the adhesive attaching station 303, and the unloading station 304.

Along the rotation direction of the turntable 31, the winding station 301, the adhesive attaching station 303, and the unloading station 304 are sequentially arranged, so that after the electrode assembly 200 on the winding mandrel 32 is wound, the electrode assembly 200 is subjected to adhesive attachment at the adhesive attaching station 303.

The winding mechanism 30 further includes an adhesive attaching roller 34 provided at the adhesive attaching station 303. The adhesive attaching roller 34 is configured to attach an adhesive to a tail end of the electrode assembly 200.

The adhesive attaching roller 34 is configured to attach fixing structures such as an adhesive tape and adhesive paper to the tail end of the second separator 240 so as to prevent the electrode assembly 200 from loosening.

By adopting the above technical solution, the adhesive attaching roller 34 is provided, and the adhesive attaching roller 34 can attach the adhesive to the tail end of the second separator 240, so that the tail end of the second separator 240 is not easily separated from the laminated sheet 250, and the electrode assembly 200 is not easily loosened, improving the stability of the attachment between the second separator 240 and the laminated sheet 250. The winding mechanism 30 can complete the processes of winding and adhesive attachment at one time, improving the manufacturing efficiency of the electrode assembly 200.

In some embodiments, a terminating station 302 is further provided on the winding device 100. The terminating station 302 is disposed between the winding station 301 and the adhesive attaching station 303 along the rotation direction of the turntable 31. The winding mandrel 32 can rotate with the turntable 31 to enter one of the winding station 301, the adhesive attaching station 303, the terminating station 302, and the unloading station 304.

The winding mechanism 30 further includes a terminating roller 33 disposed adjacent to the terminating station 302. The terminating roller 33 is configured to press the electrode assembly 200 to terminate the electrode assembly 200.

Along the rotation direction of the turntable 31, the terminating station 302 is disposed between the winding station 301 and the adhesive attaching station 303, so that the winding mandrel 32 can first rotate from the winding station 301 to the terminating station 302, and then rotate from the terminating station 302 to the adhesive attaching station 303. The terminating roller 33 is disposed adjacent to the terminating station 302. When the winding mandrel 32 rotates to the terminating station 302, the terminating roller 33 can apply pressure to the electrode assembly 200, so that the tail of the second separator 240 is attached to the laminated sheet 250, reducing the probability of separation of the separator and the electrode sheet at the tail end of the electrode assembly 200.

The winding mechanism 30 provided by the embodiments of the present application includes the terminating roller 33. Multiple winding mandrels 32 can sequentially rotate to the terminating roller 33 to terminate the electrode assembly 200 wound on the winding mandrel 32, improving the stability of the attachment between the second separator 240 and the laminated sheet 250.

In other embodiments, the terminating station 302 and the adhesive attaching station 303 may alternatively be the same station.

In some embodiments, referring to FIG. 1, at least four winding mandrels 32 are provided and spaced apart along the circumferential direction of the turntable 31.

Four or more winding mandrels 32 may be provided. When four winding mandrels 32 are provided, the winding mandrels 32 stay at the winding station 301, the terminating station 302, the adhesive attaching station 303, and the unloading station 304 respectively. As the turntable 31 rotates, the winding mandrels 32 sequentially move between the winding station 301, the terminating station 302, the adhesive attaching station 303, and the unloading station 304 to complete the winding process of the electrode assembly 200.

The winding mechanism 30 provided by the embodiments of the present application includes at least four winding mandrels 32. The at least four winding mandrels 32 respectively correspond to actions of winding, terminating, adhesive attachment, and unloading. The winding mandrel 32 performs only one action at each station, shortening the dwell time required for the winding mandrel 32 at each station, and effectively improving the winding speed.

As shown in FIG. 1, the winding mandrel 32 is telescopically disposed on the turntable 31. A retraction station 305 is further provided on the winding device 100. The retraction station 305 is located between the unloading station 304 and the winding station 301 along the rotation direction of the turntable 31. The winding mandrel 32 can retract relative to the turntable 31 at the retraction station 305.

At least five winding mandrels 32 are provided and spaced apart along the circumferential direction of the turntable 31. Different winding mandrels 32 can be respectively located at the winding station 301, the terminating station 302, the adhesive attaching station 303, the unloading station 304, and the retraction station 305.

The winding mandrel 32 can not only rotate relative to the turntable 31, but also telescope relative to the turntable 31, that is, the winding mandrel 32 can extend out of an outer side of the turntable 31 or retract below a surface of the turntable 31.

The retraction station 305 is located between the unloading station 304 and the winding station 301 along the rotation direction of the turntable 31. Specifically, the retraction station 305 is located between one side of the winding station 301 facing away from the terminating station 302 along the rotation direction of the turntable 31 and one side of the unloading station 304 facing away from the adhesive attaching station 303 along the rotation direction of the turntable 31. When the winding mandrel 32 is located at the retraction station 305, the winding mandrel 32 can retract into the frame.

The winding mechanism 30 provided by the embodiments of the present application includes at least five winding mandrels 32. The at least five winding mandrels 32 respectively correspond to actions of winding, terminating, adhesive attachment, unloading, and retracting. The winding mandrel 32 performs only one action at each station, shortening the dwell time required for the winding mandrel 32 at each station. In addition, multiple winding mandrels 32 can perform different actions simultaneously, reducing the feeding waiting time of the laminated sheet 250 and the second separator 240, and effectively improving the winding speed.

In other embodiments, the retraction station 305 can be omitted. For example, the winding mandrel 32 first completes unloading at the unloading station 304, and then the winding mandrel 32 completes retraction at the unloading station 304. Certainly, the winding mandrel 32 may alternatively be configured as a structure that does not need to telescope.

In some embodiments, referring to FIG. 1, the winding mandrel 32 includes two main body portions 321 rotatably disposed on the turntable 31. The two main body portions 321 are spaced apart to form an accommodation gap 322. The accommodation gap 322 is configured to allow the laminated sheet 250 and the second separator 240 to pass through. The two main body portions 321 cooperate to wind the laminated sheet 250 and the second separator 240.

The winding mandrel 32 may be cylindrical, so that an outer peripheral contour of the main body portions 321 is arc-shaped. The accommodation gap 322 is provided between the two main body portions 321, and the accommodation gap 322 can clamp head ends of the laminated sheet 250 and the second separator 240 to play a fixing role. Optionally, the two main body portions 321 can move toward or away from each other to facilitate clamping or releasing of the laminated sheet 250 and the second separator 240. The winding mandrel 32 can alternatively fix the head end of the electrode assembly 200 through other fixing structures.

During winding, the head ends of the laminated sheet 250 and the second separator 240 pass through the accommodation gap 322 and are wound on the two main body portions 321. The two main body portions 321 rotate simultaneously to jointly wind the laminated sheet 250 and the second separator 240, thereby forming the wound electrode assembly 200.

The embodiments of the present application provide a structure of the winding mandrel 32. The winding mandrel 32 includes two opposite main body portions 321, and an accommodation gap 322 is formed between the two main body portions 321, so that the head ends of the laminated sheet 250 and the second separator 240 can enter and be fixed in the accommodation gap 322, and then the rotation of the winding mandrel 32 can wind the laminated sheet 250 and the second separator 240 on the winding mandrel 32; and tail ends of the laminated sheet 250 and the second separator 240 can be located on an outer side of the winding mandrel 32, so as to facilitate subsequent terminating processing on the tail end of the electrode assembly 200.

As shown in FIG. 1, in some embodiments, the separator unwinding mechanism 20 is disposed between the discharging side of the laminating mechanism 10 and a feeding side of the winding mechanism 30.

The separator unwinding mechanism 20 is disposed downstream of the laminating mechanism 10, so that the separator unwinding mechanism 20 can not only unwind the second separator 240, but also convey the second separator 240 together with the laminated sheet 250 to the winding mechanism 30.

The separator unwinding mechanism 20 includes a separator unwinding roller 21 and a first conveying roller 22. The separator unwinding roller 21 is configured to unwind the second separator 240. The first conveying roller 22 is configured to allow the second separator 240 to converge with the laminated sheet 250 to form a stacked sheet, and to convey the stacked sheet to the winding mechanism 30.

The separator unwinding mechanism 20 includes the separator unwinding roller 21 and the first conveying roller 22. The first conveying roller 22 is configured to allow the laminated sheet 250 and the second separator 240 to converge, so that the laminated sheet 250 and the second separator 240 can be stacked to form a stacked sheet, and then the stacked sheet is conveyed to the winding mechanism 30 for winding.

By adopting the above technical solution, the separator unwinding mechanism 20 is located downstream of the laminating mechanism 10. The second electrode sheet 230 provided by the separator unwinding mechanism 20 can be stacked with the laminated sheet 250 and wound together. The separator unwinding mechanism 20 can be spaced apart from the winding mechanism 30, avoiding the problem of crowded space above the winding mechanism 30. In addition, the winding device 100 separates each unwinding roller from the winding mechanism 30, with a flexible and convenient layout.

In some embodiments, referring to FIG. 1, the winding device 100 further includes a second detection component 42. The second detection component 42 is disposed between the first conveying roller 22 and the winding mechanism 30, and is configured to detect the stacked sheet.

Since the laminated sheet 250 and the second separator 240 are stacked at the first conveying roller 22 to form a stacked sheet, the second detection component 42 is disposed downstream of the first conveying roller 22 and configured to detect the stacked sheet. The second detection component 42 may include a camera, a machine vision detection component, or other structures. The camera may be a CCD camera, or the like. The second detection component 42 may further include other elements such as a controller. The second detection component 42 can acquire image information (for example, position, color, shape, and the like) of the stacked sheet, and can convert the image information into a digital signal and send the digital signal to the controller, so that the controller can determine whether the stacked sheet meets the requirements according to a preset program, for example, determining whether the second separator 240 is offset, whether the second separator 240 can cover the first electrode sheet 210 and the second electrode sheet 230, and the like.

By adopting the above technical solution, the second detection component 42 is disposed between the first conveying roller 22 and the winding mechanism 30 and can comprehensively detect the state of the stacked sheet, and the detection result can have relatively high accuracy.

In some embodiments, the winding device 100 may further include a separator laminating assembly (not shown in the figure). The separator laminating assembly is disposed between the first conveying roller 22 and the winding mechanism 30. The separator laminating assembly is configured to laminate the second separator 240 with the laminated sheet 250.

The separator laminating assembly may be located upstream or downstream of the first conveying roller 22. The separator laminating assembly may include two laminating rollers disposed opposite each other. When the two laminating rollers apply pressure to the second separator 240 and the laminated sheet 250 to laminate the second separator 240 with the laminated sheet 250. In this way, the second separator 240 and the laminated sheet 250 can be laminated in advance before entering the winding mechanism 30, without mutual displacement.

The winding device 100 may further include a third detection component (not shown in the figure) disposed downstream of the separator laminating assembly and configured to detect the state after the second separator 240 and the laminated sheet 250 are laminated. The third detection component can also complete the detection of head throwing and tail throwing. It can be understood that the third detection component can also be omitted. In this case, the second detection component 42 can be disposed between the separator laminating assembly and the winding mechanism 30.

It can be understood that the winding device 100 may further include a fourth detection component (not shown in the figure) disposed toward the winding station 301. The fourth detection component is configured to detect the state of the wound electrode assembly 200.

In some other embodiments, the separator laminating assembly can be omitted, that is, there is no need to laminate the second separator 240 with the laminated sheet 250 before winding.

Referring to FIG. 1, the winding device 100 further includes a separator cutting mechanism 80. The separator cutting mechanism 80 is disposed adjacent to the winding mechanism 30 and configured to cut the first separator 220 and/or the second separator 240.

Since the first separator 220 and the second separator 240 are fed using continuous rolls, after the first separator 220 and the second separator 240 are stacked with the first electrode sheet 210 and the second electrode sheet 230, the separator cutting mechanism 80 is required to cut the first separator 220 and the second separator 240.

One separator cutting mechanisms 80 may be provided. In this case, the separator cutting mechanism 80 cuts the first separator 220 and the second separator 240 simultaneously. At least two separator cutting mechanisms 80 may alternatively be provided. In this case, one separator cutting mechanism 80 is configured to cut the first separator 220, and the other separator cutting mechanism 80 is configured to cut the second separator 240.

The separator cutting mechanism 80 is disposed at the winding mechanism 30, so that the separator cutting mechanism 80 can cut the separators before or after the first separator 220 and the second separator 240 are wound, and the specific position of the separator cutting mechanism 80 can be flexibly set.

The separator cutting mechanism 80 may include multiple cutting structures, such as a linear cutter that reciprocates along a straight line, a cam cutter 81 that rotates around an axis, and a laser cutting structure.

The winding device 100 provided by the embodiments of the present application includes the separator cutting mechanism 80. The separator cutting mechanism 80 is disposed adjacent to the winding mechanism 30, so that the winding device 100 can cut the separators before or after the electrode assembly 200 is wound, without consuming separate separator cutting time, improving the overall winding efficiency.

Still referring to FIG. 1, in some embodiments, along the rotation direction of the turntable 31, the separator cutting mechanism 80 is disposed between the winding station 301 and the unloading station 304.

Optionally, along the rotation direction of the turntable 31, the separator cutting mechanism 80 is located between the winding station 301 and the terminating station 302, so that after the separator cutting mechanism 80 cuts the first separator 220 and/or the second separator 240, the electrode assembly 200 can terminate at the terminating station 302.

In the first embodiment, the first separator 220 and the second separator 240 have not been cut on the winding station 301. The winding mandrel 32 drives the electrode assembly 200 to rotate from the winding station 301 to the terminating station 302. The separator cutting mechanism 80 cuts the first separator 220 and the second separator 240 in the electrode assembly 200 together. In other embodiments, one of the first separator 220 and the second separator 240 can be cut before wound, so that the separator cutting mechanism 80 located between the winding station 301 and the unloading station 304 can cut the other of the first separator 220 and the second separator 240.

Optionally, the separator cutting mechanism 80 includes a linear cutter and a fixed cutter. The linear cutter can move toward the fixed cutter to cut the separator. The linear cutter can move away from the fixed cutter to reset.

By adopting the above technical solution, the separator cutting mechanism 80 can cut the first separator 220 and/or the second separator 240 after the electrode assembly 200 is wound, so as to facilitate terminating of the electrode assembly 200. In addition, the separator cutting mechanism 80 is located between the winding station 301 and the unloading station 304, without consuming separate separator cutting time. The winding efficiency of the winding device 100 is relatively high.

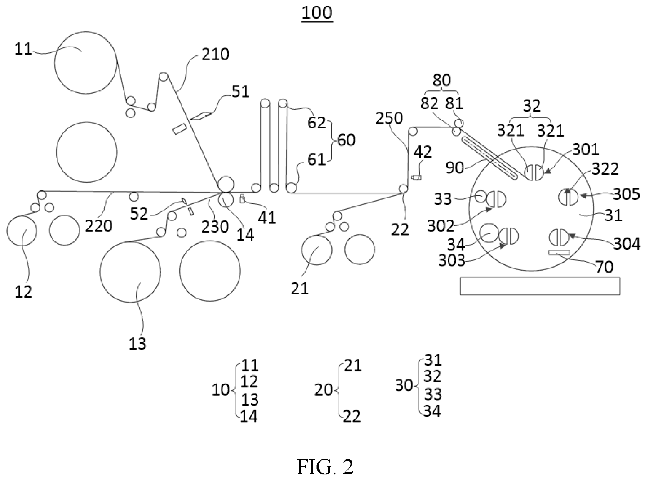

Referring to FIG. 2, a second embodiment of the present application provides a winding device 100 including a laminating mechanism 10, a separator unwinding mechanism 20, and a winding mechanism 30. This embodiment is different from the first embodiment in that a separator cutting mechanism 80 is located on a feeding side of the winding mechanism 30, and the winding device 100 further includes a conveying member 90 disposed between the separator cutting mechanism 80 and the winding mechanism 30, where the conveying member 90 is configured to convey a first separator 220 and/or a second separator 240 to the winding mechanism 30.

In the second embodiment, the separator unwinding mechanism 20 is disposed downstream of the laminating mechanism 10. The separator unwinding mechanism 20 includes a separator unwinding roller 21 and a first conveying roller 22. The separator unwinding roller 21 is configured to unwind the second separator 240. The first conveying roller 22 is configured to allow the second separator 240 to converge with the laminated sheet 250 to form a stacked sheet.

The separator cutting mechanism 80 is located upstream the winding mechanism 30. The separator cutting mechanism 80 can cut the first separator 220 and the second separator 240 before the stacked sheet is wound. The separator cutting mechanism 80 may include multiple cutting structures, such as a linear cutter that reciprocates along a straight line, a cam cutter 81 that rotates around an axis, and a laser cutting structure.

In this embodiment, the conveying member 90 is not only configured to convey the first separator 220 and the second separator 240, but also configured to convey a first electrode sheet 210 and a second electrode sheet 230. That is, the conveying member 90 is configured to convey the stacked sheet from the separator cutting mechanism 80 to a winding mandrel 32 at a winding station 301. The conveying member 90 may include multiple conveying structures, such as grippers and conveying belts. The conveying member 90 may also convey the laminated sheet 250 or the second separator 240, not limited to conveying the stacked sheet.

After a previous winding mandrel 32 winds an electrode assembly 200, the separator cutting mechanism 80 cuts the first separator 220 and the second separator 240, and the conveying member 90 conveys a head end of a next electrode assembly 200 to an idle winding mandrel 32 at the winding station 301, helping the winding mandrel 32 to wind the next electrode assembly 200.

The separator cutting mechanism 80 provided by this embodiment of the present application is disposed on the feeding side of the winding mechanism 30, and the conveying member 90 is configured to convey the separators or sheets to the winding mechanism 30, helping the winding mechanism 30 to wind the electrode assembly 200. By adopting the above technical solution, the separator cutting mechanism 80 does not need to avoid the winding mandrel 32, helping to simplify the structure of the device. The winding device 100 can convey the separator while cutting the separator, which significantly improves winding efficiency compared to a method of first cutting the separator and then conveying the separator.

In other embodiments, the conveying member 90 can be omitted. For example, the separator cutting mechanism 80 is adjacent to the winding station 301, and the cut separator can be directly fixed and wound by the winding mandrel 32.

In some embodiments, the conveying member 90 is a vacuum adsorption conveying belt.

The vacuum adsorption conveying belt refers to a conveying belt with a vacuum adsorption function for separators. The vacuum adsorption conveying belt is connected to a vacuum pumping apparatus. A surface of the conveying belt is provided with vacuum adsorption holes. Under the vacuum pumping action of the vacuum pumping apparatus, the vacuum adsorption holes adsorb the separators to prevent the separators from warping or displacing during conveyance. In addition to adsorbing the separator, the vacuum adsorption conveying belt can also adsorb debris, dust, and other impurities, reducing the possible adverse effect of impurities on the separators and the processing environment.

During operation, after the cam cutter 81 cuts the separator, the conveying member 90 conveys a head separator of the electrode assembly 200 to the winding mandrel 32. For example, a head of the separator falls vertically and enters an accommodation gap 322. The winding mandrel 32 can clamp the head separator through the accommodation gap 322, and then starts winding. The conveying member 90 can also convey a tail separator of the electrode assembly 200 to the winding mandrel 32. Subsequently, the tail separator can be terminated by a terminating roller 33.

The conveying member 90 of this embodiment of the present application is a vacuum adsorption conveying belt, which can improve the stability of conveying the separator and reduce the probability of the separator warping or displacing during conveyance.

In some embodiments, a conveying speed of the vacuum adsorption conveying belt is equal to a winding speed of the winding mandrel 32 at the winding station 301.

The winding speed of the winding mandrel 32 refers to a winding speed of the winding mandrel 32 at the winding station 301 for winding the electrode assembly 200, that is, a ratio of a length of the electrode assembly 200 to time used for winding, indicating the length of the separator wound by the winding mandrel 32 per unit time. The conveying speed of the vacuum adsorption conveying belt is a length of the separator conveyed per unit time. By setting the conveying speed of the vacuum adsorption conveying belt equal to the winding speed of the winding mandrel 32, the tension of the separator may be zero, reducing the probability of separator deformation due to excessive tension. In addition, the vacuum adsorption conveying belt has a relatively fast conveying speed and high conveying efficiency.

It can be understood that the conveying speed of the vacuum adsorption conveying belt and the winding speed of the winding mandrel 32 may not be equal, as long as the two winding speeds are adapted to make the tension of the separator within a certain range.

Still referring to FIG. 2, in some embodiments, the separator cutting mechanism 80 includes a cam cutter 81 and a cutter seat 82 disposed opposite each other. The cam cutter 81 can rotate relative to the cutter seat 82 and cooperate with the cutter seat 82 to cut the first separator 220 and/or the second separator 240.

The cam cutter 81 refers to a structure in the separator cutting mechanism 80 for cutting the separator. The cam cutter 81 can perform intermittent actions and cut the separator. The length of the cut separator can be adjusted by adjusting a duration between two adjacent cutting operations of the cam cutter 81. The cam cutter 81 has the advantages of high efficiency, high precision, relatively accurate intermittent indexing action, and relatively stable rotation, and can relatively accurately achieve periodic intermittent cutting of the separator.

The cutter seat 82 refers to a structure in the separator cutting mechanism 80 that supports the cam cutter 81. The separator can pass between the cutter seat 82 and the cam cutter 81. When the cam cutter 81 cuts the separator, the separator can be pressed on the cutter seat 82 and cut. The material of the cutter seat 82 may include plastic, metal, or other materials.

The cutter seat 82 may be a rectangular sheet-shaped structure, a cylindrical structure, or other structures. The cutter seat 82 can be fixedly connected to a housing or rotatably connected to the housing, thereby reducing the friction between the separator and the cutter seat 82. In some embodiments, the cutter seat 82 is a roller structure rotatably connected to the housing. When the cam cutter 81 cuts the separator, the separator can be pressed on the roller structure, and the separator is cut.

Since the cam cutter 81 can periodically perform cutting actions, during use, a rotation period of the cam cutter 81 can be determined according to a length and linear speed of the separator, so that the cam cutter 81 can cut the separator without deceleration.

The periodic intermittent cutting of the cam cutter 81 can be achieved by multiple structures. For example, the cam cutter 81 may include a driving component, a cam, a rocker arm, and a cutter. The driving component drives the cam to rotate to drive the rocker arm to reciprocate, thereby making the cutter intermittently cut the separator. For another example, the cam cutter 81 may alternatively include a driving component, a crank-slider mechanism, and a cutter. The driving component drives the crank-slider mechanism to move, thereby driving the cutter to reciprocate through the crank-slider mechanism. It can be understood that the periodic intermittent cutting action of the cam cutter 81 can also be achieved by other structures, not limited to the above two.

As shown in FIG. 2, in some embodiments, the cam cutter 81 cuts the first separator 220 and the second separator 240. In other embodiments, a separator to be cut may alternatively be only the first separator 220 or the second separator 240, or the separator to be cut includes both the separator and the electrode sheet.

The separator cutting mechanism 80 provided by this embodiment includes the cam cutter 81 and the cutter seat 82. The cam cutter 81 can perform periodic intermittent cutting actions. The length of the separator can be controlled by controlling an intermittent duration of the cam cutter 81. The intermittent indexing action of the cam cutter 81 has relatively high precision. In addition, the cam cutter 81 can achieve cutting of the separator without deceleration, further improving the winding efficiency.

In order to cut the separator without decelerating the separator, a rotation period duration of the cam cutter 81 can be set to be related to a length and conveying linear speed of the separator to be cut.

In some embodiments, the rotation period duration of the cam cutter 81 is equal to a ratio of a length of the first separator 220 in the electrode assembly 200 to a conveying linear speed of the first separator 220; and/or the rotation period duration of the cam cutter 81 is equal to a ratio of a length of the second separator 240 in the electrode assembly 200 to a conveying linear speed of the second separator 240.

The rotation period duration of the cam cutter 81 is the time used for the cam cutter 81 to rotate one cycle. The separator to be cut may be the first separator 220 and/or the second separator 240. By cutting the first separator 220 and/or the second separator 240, the first separator 220 and/or the second separator 240 with a preset length can be formed in the electrode assembly 200. The conveying linear speed of the separator to be cut is a conveying linear speed of the separator to be cut before entering the winding mechanism 30.

Taking FIG. 2 as an example, the first separator 220 and the second separator 240 are simultaneously conveyed toward the winding mechanism 30 and have the same conveying linear speed. The lengths of the first separator 220 and the second separator 240 in the electrode assembly 200 may be equal or unequal. For example, the length of the first separator 220 in the electrode assembly 200 is greater than the length of the second separator 240, so that the rotation period duration of the cam cutter 81 is equal to the ratio of the length of the first separator 220 in the electrode assembly 200 to the conveying linear speed of the first separator 220.

By satisfying the above conditions, the cam cutter 81 can continuously rotate. Since the cam cutter 81 does not need to stop, the waiting time for cutting is reduced. The cam cutter 81 can cut the separator to be cut every rotation, without reducing the conveying linear speed of the separator for cutting the separator, achieving cutting of the separator without deceleration, and effectively improving the overall winding speed.

In other embodiments, if the cam cutter 81 needs to move toward the cutter seat 82 after rotating, the rotation period duration of the cam cutter 81 may alternatively be less than the ratio of the length of the separator to be cut to the conveying linear speed of the separator to be cut.

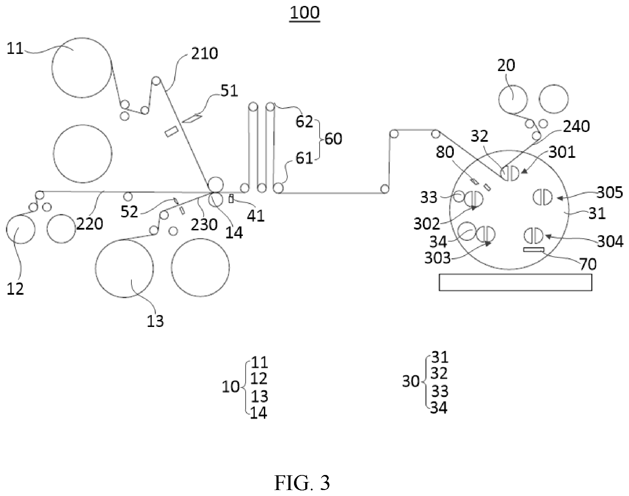

Referring to FIG. 3, a third embodiment of the present application provides a winding device 100 including a laminating mechanism 10, a separator unwinding mechanism 20, and a winding mechanism 30. This embodiment is different from the first embodiment in that the separator unwinding mechanism 20 is disposed on one side of the winding mechanism 30, the separator unwinding mechanism 20 is configured to convey a second separator 240 to a winding mandrel 32 located at a winding station 301, and a laminated sheet 250 and the second separator 240 converge on the winding mandrel 32 at the winding station 301.

In the third embodiment, the separator unwinding mechanism 20 directly conveys the second separator 240 to the winding mechanism 30, so that the laminated sheet 250 conveyed by the laminating mechanism 10 and the second separator 240 conveyed by the separator unwinding mechanism 20 are wound together.

By adopting the above technical solution, the separator unwinding mechanism 20 can directly convey the second separator 240 to the winding device 100. The winding mandrel 32 located at the winding station 301 can wind the laminated sheet 250 and the second separator 240 together to form an electrode assembly 200.

As shown in FIG. 3, a separator cutting mechanism 80 is located between the winding station 301 and a terminating station 302 along a rotation direction of a turntable 31, and the separator cutting mechanism 80 can cut a first separator 220 and the second separator 240 simultaneously.

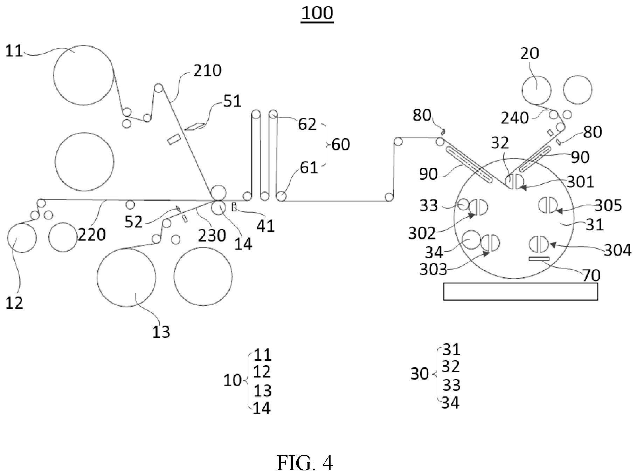

Referring to FIG. 4, a fourth embodiment of the present application provides a winding device 100 including a laminating mechanism 10, a separator unwinding mechanism 20, and a winding mechanism 30. The separator unwinding mechanism 20 is disposed on one side of the winding mechanism 30. A winding mandrel 32 is configured to wind a second separator 240 and a laminated sheet 250 together to form a stacked sheet. Compared with the third embodiment, a separator cutting mechanism 80 in the winding device 100 is different.

In the fourth embodiment, the separator cutting mechanism 80 is disposed on a feeding side of the winding mechanism 30. Two separator cutting mechanisms 80 are provided, where one separator cutting mechanism 80 is disposed between the laminating mechanism 10 and the winding mechanism 30 and configured to cut a first separator 220, and the other separator cutting mechanism 80 is disposed between the separator unwinding mechanism 20 and the winding mechanism 30 and configured to cut the second separator 240. The winding device 100 further includes two conveying members 90. The conveying members 90 are respectively disposed between the corresponding separator cutting mechanism 80 and the winding mechanism 30. One conveying member 90 is configured to convey the laminated sheet 250, and the other conveying member 90 is configured to convey the second separator 240. The separator cutting mechanism 80 may include a cam cutter 81 or may include a cutter that reciprocates along a straight line, a laser cutter, and the like.

By adopting the above technical solution, the first separator 220 and the second separator 240 are both cut before wound. The separator cutting mechanism 80 does not occupy the space of the winding mechanism 30 and does not need to avoid the winding mandrel 32 rotating with a turntable 31.

Referring to FIG. 1, the winding device 100 provided by the first embodiment of the present application includes a laminating mechanism 10, a separator unwinding mechanism 20, and a winding mechanism 30. The laminating mechanism 10 includes a first unwinding roller 11, a second unwinding roller 12, a third unwinding roller 13, and a laminating assembly 14. The winding device 100 further includes a first electrode sheet cutting apparatus 51, a second electrode sheet cutting apparatus 52, and a buffering mechanism 60. The first unwinding roller 11, the second unwinding roller 12, and the third unwinding roller 13 are disposed on a feeding side of the laminating assembly 14. The winding mechanism 30 is disposed on a discharging side of the laminating assembly 14. A buffering mechanism 60 is disposed downstream of the laminating assembly 14. The separator unwinding mechanism 20 is disposed downstream of the laminating mechanism 10. The winding mechanism 30 includes a turntable 31 and multiple winding mandrels 32. The separator cutting mechanism 80 is disposed between a winding station 301 and an unloading station 304.

The operation principle of the winding device 100 is as follows:
A first electrode sheet 210, a second electrode sheet 230, and a first separator 220 are unwound. Then, the first separator 220 is sandwiched between the first electrode sheet 210 and the second electrode sheet 230, and the three are laminated together by the laminating assembly 14 to form a laminated sheet 250. A first detection component 41 is configured to detect whether the laminated sheet 250 has defects. During subsequent conveyance and winding, the first electrode sheet 210, the second electrode sheet 230, and the first separator 220 have no mutual displacement. Then, after passing through the buffering mechanism 60, the laminated sheet 250 converges with a second separator 240 to form a stacked sheet. A second detection component 42 detects whether the stacked sheet has defects, which can guide the deviation correction of the separator.

After the first winding mandrel 32 winds an electrode assembly 200, the remaining terminating first separator 220 and second separator 240 are not wound. In this case, a winding mandrel 32 rotates along a circumferential direction of a turntable 31 to a terminating roller 33. A separator cutting mechanism 80 cuts a terminating separator. The terminating roller 33 presses the separator for winding termination. After winding is completed, the winding mandrel 32 continues to rotate along the circumferential direction of the turntable 31 to an adhesive attaching roller 34. The adhesive attaching roller 34 attaches a terminating adhesive to the electrode assembly 200 to ensure that the separator does not loosen. Then, the winding mandrel 32 rotates along the circumferential direction of the turntable 31 to an unloading station 304. An unloading structure grips the electrode assembly 200 for unloading. Then, the winding mandrel 32 continues to rotate along the circumferential direction of the turntable 31 to a retraction station 305, and the winding mandrel 32 retracts. Finally, the winding mandrel 32 rotates along the circumferential direction of the turntable 31 to an uppermost winding station 301, and the winding mandrel 32 extends out. Then, the electrode sheets are fed and wound, and the cycle repeats.

Referring to FIG. 2, the winding device 100 provided by the second embodiment of the present application includes a laminating mechanism 10, a separator unwinding mechanism 20, and a winding mechanism 30. The laminating mechanism 10 includes a first unwinding roller 11, a second unwinding roller 12, a third unwinding roller 13, and a laminating assembly 14. The winding device 100 further includes a first electrode sheet cutting apparatus 51, a second electrode sheet cutting apparatus 52, and a buffering mechanism 60. The first unwinding roller 11, the second unwinding roller 12, and the third unwinding roller 13 are disposed on one side of the winding device 100, and the winding mechanism 30 is disposed on the other side of the winding device 100. The buffering mechanism 60 is disposed downstream of the laminating assembly 14. A separator unwinding mechanism 20 is disposed downstream of the laminating mechanism 10. The winding mechanism 30 includes a turntable 31 and multiple winding mandrels 32. A separator cutting mechanism 80 is located upstream the winding mechanism 30. The separator cutting mechanism 80 includes a cam cutter 81 and a cutter seat 82. The winding device 100 further includes a vacuum adsorption conveying belt disposed between the separator cutting mechanism 80 and the winding mechanism 30.

The operation principle of the winding device 100 is as follows:
A first electrode sheet 210, a second electrode sheet 230, and a first separator 220 are unwound. Then, the first separator 220 is sandwiched between the first electrode sheet 210 and the second electrode sheet 230, and the three are laminated together by the laminating assembly 14 to form a laminated sheet 250. A first detection component 41 is configured to detect the laminated sheet 250. During subsequent conveyance and winding, the first electrode sheet 210, the second electrode sheet 230, and the first separator 220 have no mutual displacement. Then, after passing through the buffering mechanism 60, the laminated sheet 250 converges with a second separator 240 to form a stacked sheet. A second detection component 42 detects the stacked sheet, which can guide the deviation correction of the separator.

Then, a cam cutter 81 cuts the first separator 220 and the second separator 240 without reducing a conveying speed of the separators. A tail separator of a previous electrode assembly 200 is conveyed to the winding mandrel 32 through a vacuum adsorption conveying belt, and a head separator of a next electrode assembly 200 is conveyed to the winding mandrel 32 through the vacuum adsorption belt. Then, after the first winding mandrel 32 winds, the remaining terminating separator is not wound. In this case, the winding mandrel 32 rotates along a circumferential direction of the turntable 31 to a terminating roller 33. Then, the terminating roller 33 presses the separator for winding termination. After winding is completed, the winding mandrel 32 continues to rotate along the circumferential direction of the turntable 31 to an adhesive attaching roller 34. The adhesive attaching roller 34 attaches a terminating adhesive to the electrode assembly 200 to ensure that the separator does not loosen. Then, the winding mandrel 32 rotates to an unloading station 304. An unloading assembly 70 grips the electrode assembly 200 for unloading. Then, the winding mandrel 32 rotates to a retraction station 305, and the winding mandrel 32 retracts. Finally, the winding mandrel 32 rotates to an uppermost winding station 301, and the winding mandrel 32 extends out. Then, the electrode sheets are fed and wound, and the cycle repeats.

Referring to FIG. 3, the third embodiment of the present application provides a winding device 100. This embodiment is different from the first embodiment in that a separator unwinding mechanism 20 is disposed on one side of a winding mechanism 30, and a winding mandrel 32 on a winding station 301 is configured to allow a second separator 240 and a laminated sheet 250 to converge.

The operation principle of the winding device 100 is as follows:
A first electrode sheet 210, a second electrode sheet 230, and a first separator 220 are unwound. Then, the first separator 220 is sandwiched between the first electrode sheet 210 and the second electrode sheet 230, and the three are laminated together by the laminating assembly 14 to form the laminated sheet 250. A first detection component 41 detects the laminated sheet 250. Then, the laminated sheet 250 and the second separator 240 respectively enter the winding mandrel 32. After a first winding mandrel 32 winds, the remaining terminating separator is not wound. In this case, the winding mandrel 32 rotates to a terminating roller 33. Then, a separator cutting mechanism 80 cuts the terminating separator. Then, the terminating roller 33 presses the separator for winding termination. Then, the winding mandrel 32 rotates to an adhesive attaching roller 34. The adhesive attaching roller 34 attaches a terminating adhesive to an electrode assembly 200 to ensure that the separator does not loosen. Then, the winding mandrel 32 rotates to an unloading station 304. An unloading assembly 70 grips the electrode assembly 200 for unloading. Then, the winding mandrel 32 rotates to a retraction station 305, and the winding mandrel 32 retracts. Finally, the winding mandrel 32 rotates to an uppermost winding station 301, and the winding mandrel 32 extends out. Then, the electrode sheets are fed and wound, and the cycle repeats.

Referring to FIG. 4, the fourth embodiment of the present application provides a winding device 100. This embodiment is different from the third embodiment in that two separator cutting mechanisms 80 are provided, where one separator cutting mechanism 80 is disposed between a laminating mechanism 10 and a winding mechanism 30 and configured to cut a first separator 220, and the other separator cutting mechanism 80 is disposed between a separator unwinding mechanism 20 and the winding mechanism 30 and configured to cut a second separator 240. The winding device 100 further includes two conveying members 90. The conveying members 90 are respectively disposed between the separator cutting mechanism 80 and the winding mechanism 30. The separator cutting mechanism 80 may include a cam cutter or may include a cutter that reciprocates along a straight line, a laser cutter, and the like.

The operation principle of the winding device 100 is as follows:
A first electrode sheet 210, a second electrode sheet 230, and the first separator 220 are unwound. Then, the first separator 220 is sandwiched between the first electrode sheet 210 and the second electrode sheet 230, and the three are laminated together by a laminating assembly 14 to form a laminated sheet 250. A first detection component 41 detects the laminated sheet 250. Then, the laminated sheet 250 and the second separator 240 respectively enter a winding mandrel 32. Before entering the winding mandrel 32, the first separator 220 and the second separator 240 are cut by the separator cutting mechanism 80 respectively. A tail separator of a previous electrode assembly 200 is conveyed to the winding mandrel 32 through a vacuum adsorption conveying belt, and a head separator of a next electrode assembly 200 is conveyed to the winding mandrel 32 through the vacuum adsorption conveying belt. Then, after the first winding mandrel 32 winds, the remaining terminating separator is not wound. In this case, the winding mandrel 32 rotates to a terminating roller 33. The terminating roller 33 presses the separator for winding termination. Then, the winding mandrel 32 rotates to an adhesive attaching roller 34. The adhesive attaching roller 34 attaches a terminating adhesive to the electrode assembly 200. Then, the winding mandrel 32 rotates to an unloading station 304. An unloading assembly 70 grips the electrode assembly 200 for unloading. Then, the winding mandrel 32 continues to rotate to a retraction station 305, and the winding mandrel 32 retracts. Finally, the winding mandrel 32 rotates to an uppermost winding station 301, and the winding mandrel 32 extends out. Then, the electrode sheets are fed and wound, and the cycle repeats.

According to a second aspect, embodiments of the present application provide a battery manufacturing device including the winding device provided in the first aspect. The battery manufacturing device can wind the electrode assembly 200 through the winding device, achieving relatively high winding efficiency, thereby achieving relatively high manufacturing efficiency.

The above embodiments are only used to illustrate the technical solution of the present application, not to limit the present application; although the present application has been described in detail with reference to the foregoing embodiments, those of ordinary skill in the art should understand that they can still modify the technical solutions recorded in the foregoing embodiments, or equivalently replace some of the technical features; and these modifications or replacements do not make the essence of the corresponding technical solutions depart from the spirit and scope of the technical solutions of the embodiments of the present application, and should be included within the protection scope of the present application.

## Claims

1. A winding device, comprising:
a laminating mechanism configured to unwind a first electrode sheet, a first separator, and a second electrode sheet, and to laminate the first electrode sheet, the first separator, and the second electrode sheet to form a laminated sheet;
a separator unwinding mechanism configured to unwind a second separator; and
a winding mechanism disposed on a discharging side of the laminating mechanism, wherein the winding mechanism is configured to wind the laminated sheet and the second separator to form an electrode assembly.

2. The winding device according to claim 1, wherein the winding device further comprises a first detection component, and the first detection component is disposed between the laminating mechanism and the winding mechanism and configured to detect the laminated sheet.

3. The winding device according to claim 1, wherein the laminating mechanism comprises:
a first unwinding roller configured to unwind the first electrode sheet;
a second unwinding roller configured to unwind the first separator;
a third unwinding roller configured to unwind the second electrode sheet; and
a laminating assembly configured to laminate the first electrode sheet, the first separator, and the second electrode sheet to form the laminated sheet.

4. The winding device according to claim 3, wherein the winding device further comprises a frame; the first unwinding roller, the second unwinding roller, and the third unwinding roller are installed on one side of the frame; and the winding mechanism is installed on the other side of the frame.

5. The winding device according to claim 3 or 4, wherein the winding device further comprises a buffering mechanism, the buffering mechanism is disposed between the laminating assembly and the winding mechanism, and the buffering mechanism is configured to buffer the laminated sheet.

6. The winding device according to claim 5, wherein the winding device further comprises:
a first electrode sheet cutting apparatus disposed between the first unwinding roller and the laminating assembly, the first electrode sheet cutting apparatus being configured to cut the first electrode sheet; and
a second electrode sheet cutting apparatus disposed between the third unwinding roller and the laminating assembly, the second electrode sheet cutting apparatus being configured to cut the second electrode sheet.

7. The winding device according to claim 5, wherein the buffering mechanism comprises a fixed roller and a floating roller spaced apart, the fixed roller is fixed relative to the laminating assembly, the floating roller is able to approach or move away from the fixed roller to change a length of the laminated sheet buffered in the buffering mechanism, and a movement direction of the floating roller intersects with a conveying direction of the laminating assembly.

8. The winding device according to any one of claims 1 to 7, wherein
the winding mechanism comprises a turntable and at least two winding mandrels rotatably disposed on the turntable; and
the winding mechanism has a winding station and an unloading station spaced apart along a rotation direction of the turntable, and the winding mandrel is able to rotate with the turntable to enter one of the winding station and the unloading station.

9. The winding device according to claim 8, wherein an adhesive attaching station is further provided on the winding device, and the adhesive attaching station is disposed between the winding station and the unloading station along the rotation direction of the turntable; and the winding mandrel is able to rotate with the turntable to enter one of the winding station, the adhesive attaching station, and the unloading station.

10. The winding device according to claim 9, wherein the winding mechanism further comprises an adhesive attaching roller disposed at the adhesive attaching station, and the adhesive attaching roller is configured to attach an adhesive to a tail end of the electrode assembly.

11. The winding device according to claim 9, wherein a terminating station is further provided on the winding device, and the terminating station is disposed between the winding station and the adhesive attaching station along the rotation direction of the turntable; and the winding mandrel is able to rotate with the turntable to enter one of the winding station, the adhesive attaching station, the terminating station, and the unloading station.

12. The winding device according to claim 11, wherein the winding mechanism further comprises a terminating roller disposed at the terminating station, and the terminating roller cooperates with the winding mandrel to press the electrode assembly to terminate the electrode assembly.

13. The winding device according to claim 12, wherein at least four winding mandrels are provided and spaced apart along a circumferential direction of the turntable.

14. The winding device according to claim 12, wherein the winding mandrel is telescopically disposed on the turntable; a retraction station is further provided on the winding device, and the retraction station is located between the unloading station and the winding station along the rotation direction of the turntable; the winding mandrel is able to rotate with the turntable to enter one of the winding station, the adhesive attaching station, the terminating station, the unloading station, and the retraction station; and when the winding mandrel enters the retraction station, the winding mandrel is able to retract relative to the turntable.

15. The winding device according to claim 14, wherein at least five winding mandrels are provided and spaced apart along a circumferential direction of the turntable.

16. The winding device according to any one of claims 8 to 15, wherein the winding mandrel comprises two main body portions rotatably disposed on the turntable, the two main body portions are spaced apart to form an accommodation gap, the accommodation gap is configured for allowing the laminated sheet and the second separator to pass through, and the two main body portions cooperate to wind the laminated sheet and the second separator.

17. The winding device according to any one of claims 8 to 16, wherein
the separator unwinding mechanism is disposed between the discharging side of the laminating mechanism and a feeding side of the winding mechanism.

18. The winding device according to claim 17, wherein the separator unwinding mechanism comprises a separator unwinding roller and a first conveying roller; the separator unwinding roller is configured to unwind the second separator; and the first conveying roller is configured to allow the second separator to converge with the laminated sheet to form a stacked sheet, and to convey the stacked sheet to the winding mechanism.

19. The winding device according to claim 18, wherein the winding device further comprises a second detection component, the second detection component is disposed between the first conveying roller and the winding mechanism, and the second detection component is configured to detect the stacked sheet.

20. The winding device according to claim 18, wherein the winding device further comprises a separator laminating assembly, the separator laminating assembly is disposed between the first conveying roller and the winding mechanism, and the separator laminating assembly is configured to laminate the second separator with the laminated sheet.

21. The winding device according to any one of claims 8 to 16, wherein the separator unwinding mechanism is disposed on one side of the winding mechanism, the separator unwinding mechanism is configured to convey the second separator to the winding mandrel located at the winding station, and the laminated sheet and the second separator converge on the winding mandrel at the winding station.

22. The winding device according to any one of claims 8 to 21, wherein the winding device further comprises a separator cutting mechanism, and the separator cutting mechanism is disposed adjacent to the winding mechanism and configured to cut the first separator and/or the second separator.

23. The winding device according to claim 22, wherein along the rotation direction of the turntable, the separator cutting mechanism is disposed between the winding station and the unloading station.

24. The winding device according to claim 22, wherein the separator cutting mechanism is located on the feeding side of the winding mechanism.

25. The winding device according to claim 24, wherein the winding device further comprises a conveying member disposed between the separator cutting mechanism and the winding mechanism, and the conveying member is configured to convey the first separator and/or the second separator to the winding mechanism.

26. The winding device according to claim 25, wherein the conveying member is a vacuum adsorption conveying belt.

27. The winding device according to claim 26, wherein a conveying speed of the vacuum adsorption conveying belt is equal to a winding speed of the winding mandrel at the winding station.

28. The winding device according to any one of claims 22 to 27, wherein the separator cutting mechanism comprises a cam cutter and a cutter seat disposed opposite each other, and the cam cutter is able to rotate relative to the cutter seat and cooperate with the cutter seat to cut the first separator and/or the second separator.

29. The winding device according to claim 28, wherein
a rotation period duration of the cam cutter is equal to a ratio of a length of the first separator in the electrode assembly to a conveying linear speed of the first separator; and/or
a rotation period duration of the cam cutter is equal to a ratio of a length of the second separator in the electrode assembly to a conveying linear speed of the second separator.

30. A battery manufacturing device, comprising the winding device according to any one of claims 1 to 29.
